# EUROPEAN PATENT APPLICATION

(11) **EP 4 477 569 A1**
(43) Date of publication of application: **18.12.2024**
(21) Application number: 24181009.2
(22) Date of filing: 10.06.2024
(51) Int. Cl.: B65B 61/18, B65B 51/22, B29C 65/36, B29C 65/78, B29C 65/74

(54) **A PULL-TAB APPLICATOR**

(30) Priority: 11.06.2023 EP 23178568
(71) Applicant: Tetra Laval Holdings & Finance S.A., 1009 Pully (CH)
(72) Inventor: Persson, Jens, 22186 Lund (SE); Olin, Anders, 22186 Lund (SE); Nilsson, Jonas, 22186 Lund (SE); Björviken, Tom, 22186 Lund (SE)
(74) Representative: Tetra Pak - Patent Attorneys SE

(57) **Abstract**

A pull-tab applicator (300) for attaching a pull-tab (104) to a protective layer (206) that covers a hole (106) in a packaging material (102) is presented. The protective layer (206) has an outer side (210) configured to face the pull-tab (104) and an inner side (208) configured to face a food product (FP). The pull-tab applicator (300) comprises a pull-tab engagement unit (310) and an anvil (308) arranged opposite the pull-tab engagement unit (310). The anvil (308) comprises an air channel (400) arranged to provide an air flow (402) on the inner surface (208) of the protective layer (206) at the location of the hole (106) such that the protective layer (206) is pushed towards the pull-tab (104) when the pull-tab engagement unit (310) is operated to attach the pull-tab to the protective layer (206).

## Description

### Technical Field

The invention generally relates to packaging technology. More particularly, it is related to a pull-tab applicator for attaching a pull-tab to a protective layer that covers a hole in a packaging material, as well as a packaging system and a method for attaching the pull-tab.

### Background Art

Today, carton packages for holding food products, such as Tetra Brik^{™} marketed by Tetra Pak^{™}, come with different types of opening devices. For instance, the package can be provided with a screw cap such that the package can be re-closed and stored safely after being opened. Another example of the opening device provided is the so-called pull-tab opening device, sometimes only referred to as pull-tab. As the name suggests, this opening device comprise a tab, e.g. a piece of Aluminum foil or a carton-based sheet, that is covering a punched out hole in a packaging material of the package. By pulling off the pull-tab, this is removed such that the hole is exposed, which in turn provides for that the food product can be accessed.

So-called pull-tab applicators, that is, equipment arranged for attaching pull-tabs to packaging material, have been used for many years. The pull-tab applicator may comprise a hole punch station arranged to punch holes in the packaging material. Further, it may comprise a strip application station for providing an inner strip, or more generally a protective layer, on an inside of the packaging material such that once the packaging material is formed into a package and filled with a food product, direct contact between a carton layer of the packaging material and the food product is avoided. As an effect, the packaging material, more particularly the carton layer, is not deteriorated by the food product over time. The pull-tab applicator may further comprise a pull-tab sealing station, sometimes referred to as a pull-tab engagement station, arranged to attach the pull-tab to the packaging material such that the hole is covered.

Even though the pull-tab applicators available today serve their purpose, there is room for improvement. One area of improvement is to provide for that removal of the pull-tab can be facilitated. In other words, it is requested that the pull-tab applicator is arranged such that the pull-tab is attached such that this at a later stage can more easily be pulled off by a consumer.

### Summary

It is an object of the invention to at least partly overcome one or more of the above-identified limitations of the prior art. In particular, it is an object to provide for an improved attachment between a protective layer of a packaging material and a pull-tab such that, when the pull-tab is removed by a consumer, the protective layer covering a hole is securely removed together with the pull-tab. In addition to that a risk of detachment between the pull-tab and the protective layer can be reduced, a more well-defined edge of the hole is provided such that pouring of a food product can be facilitated.

According to a first aspect it is provided a pull-tab applicator for attaching a pull-tab to a protective layer that covers a hole in a packaging material, the protective layer having an outer side configured to face the pull-tab and an inner side configured to face a food product, said pull-tab applicator comprising
a pull-tab engagement unit,
an anvil arranged opposite the pull-tab engagement unit,
a packaging material feeding unit arranged to position the packaging material with the hole between the pull-tab engagement unit and the anvil, with the outer side of the protective layer facing the pull-tab engagement unit (310) and the inner side (208) of the protective layer facing the anvil, and
a pull-tab feeding unit arranged to position the pull-tab over the hole in the packaging material, at the outer side of the protective layer,
the pull-tab engagement unit being operable to attach the pull-tab to the protective layer, wherein
the anvil comprises an air channel arranged to provide an air flow on the inner surface of the protective layer at the location of the hole such that the protective layer is pushed towards the pull-tab when the pull-tab engagement unit is operated to attach the pull-tab to the protective layer.

By using the air flow for pushing the protective layer towards the pull-tab, an improved attachment between the two can be achieved. As an effect of this improved attachment, a removal of the pull-tab during a pull-off process of the pull-tab can be facilitated. For instance, by being able to reduce a part of a hole area in which there is no attachment between the protective layer and the pull-tab, tearing of the protective layer during the pull-off process can be made in a more controlled manner.

The air flow may give rise to a pressure of at least 1.5 bar inside a cavity formed by the anvil and the protective layer in a hole area.

The effect of having the pressure above atmospheric pressure provides for that the protective layer is pushed towards the pull-tab and an edge of the hole, that is, boundaries of the cavity being formed. An advantage of using the air flow in this manner is that a control of the process of attaching the protective layer and the pull-tab can be improved. For instance, the pressure can be adapted in accordance with the ultimate tensile strength of the protective layer.

The anvil may be provided with a flat surface area surrounding an outlet of the air channel when the pull-tab engagement unit is operated to attach the pull-tab to the protective layer.

Having the flat surface and using the air channel as described comes with the positive effect that an effect of a misalignment between the anvil and the pull-tab engagement unit, e.g. an inductor, can be reduced. Even though there is a misalignment, the air flow may namely nevertheless reach the cavity and form the pressure such that the protective layer is pushed towards the pull-tab.

The flat surface area may be at least two times greater than an outlet area, thereby providing for that the pull-tab applicator is less sensitive to an offset of the anvil with respect to the pull-tab engagement unit.

A diameter of the outlet of the air channel may be less than 25% of a diameter of the hole.

The anvil may comprise a spring-loaded valve such that the air channel may be opened when the anvil is pushed towards the pull-tab engagement unit.

An advantage of having this valve is that the less energy is needed, and also that sound levels of the pull-tab applicator can be reduced.

According to a second aspect it is provided a packaging system comprising
a packaging material reel receiver for receiving a web of packaging material,
the pull-tab applicator according to the first aspect,
a sterilization station for sterilizing the web,
a longitudinal sealing station for forming the web into a tube,
a product filling pipe for filling food product into the tube, and
a transversal sealing station for forming packages from the tube filled with food product.

Having the pull-tab applicator forming part of a roll-fed packaging system comes with the advantage that the packages provided with pull-tab openings can be produced at high speeds, such as 10 000 packages per hour or more, thereby providing cost efficiency.

According to a third aspect it is provided a method for attaching a pull-tab to a protective layer that covers a hole in a packaging material, the protective layer having an outer side configured to face the pull-tab and an inner side configured to face a food product, said method comprising
positioning, by using a packaging material feeding unit, the packaging material with the hole between a pull-tab engagement unit and an anvil, with the outer side of the protective layer facing the pull-tab engagement unit and the inner side of the protective layer facing the anvil,
positioning, by using a pull-tab feeding unit, the pull-tab over the hole in the packaging material, at the outer side of the protective layer,
pushing, in a pull-tab engagement unit, the protective layer at the location of the hole towards the pull-tab by providing an air flow via an air channel in the anvil, and attaching, by the pull-tab engagement unit, the pull-tab to the protective layer.

The same features and advantages as described above with respect to the first aspect also apply to this aspect.

The air flow may give rise to a pressure of at least 1.5 bar inside a cavity formed by the anvil and the protective layer in the hole area.

The anvil may be provided with a flat surface surrounding an outlet of the air channel when the pull-tab engagement unit is operated to attach the pull-tab to the protective layer.

The flat surface area may be at least two times greater than an outlet area, thereby providing for that the pull-tab applicator is less sensitive to an offset of the anvil with respect to the pull-tab engagement unit.

A diameter of the outlet of the air channel may be less than 25% of a diameter of the hole.

According to a fourth aspect it is provided a package obtainable by a method according to the third aspect.

The abutment area between the pull-tab and the outer side of the protective layer may be at least 90% of the hole area.

An advantage of having the abutment area covering more than 90% of the hole area is that a sub-area of the hole area, most often close to the edge of the hole, in which the protective layer is not restricted to be stretched by the attachment to the pull-tab, is reduced. By having less stretching of the protective layer during the pull-off process of the pull-tab, that is, the opening of the package, a more controlled pull-off process can be achieved. Thus, as an effect, it is made possible to choose the protective layer such that this can ensure a high package integrity, that is, keeping a risk of having a rupture of the protective layer during transport or other handling of the package low, while at the same time provide for that the package can easily be opened, due to that the protective layer is restricted in how this can be stretched during the pull-off process.

The protective layer may be a polyethylene-based strip and the packaging material may be a cellulose-based packaging material, such as a carton-based packaging material.

The pull-tab engagement unit may be an inductor arranged to generate heat by inducing eddy currents in the packaging material and/or the pull-tab device, wherein the packaging material and/or the pull-tab comprises an electrically conductive layer.

The pull-tab engagement station may be arranged to attach two or more pull-tabs at two or more hole areas at the same time.

A diameter of the hole may be 3 to 8 mm, and a diameter of the anvil may be 8 to 30 mm.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates a package provided with a pull-tab opening.
Fig. 2 illustrates a cross-sectional view of the pull-tab opening.
Fig. 3 illustrates a pull-tab applicator comprising an anvil provided with an air channel.
Fig. 4A illustrates a cross-sectional view of the anvil and the pull-tab engagement unit during application of the pull-tab onto the packaging material.
Fig. 4B illustrates the hole and the anvil seen from above.
Fig. 4C illustrates the hole seen from above after the pull-tab has been removed.
Fig. 4D illustrates a cross-sectional view of a pre-laminated hole and the pull-tab.
Fig. 5A illustrates a cross-sectional front view of a pull-tab engagement station.
Fig. 5B illustrates a front view of the pull-tab engagement station.
Fig. 5C illustrates a cross-sectional perspective view of the pull-tab engagement station.
Fig. 5D illustrates a perspective view of the pull-tab engagement station.
Fig. 6 generally illustrates a packaging system.
Fig. 7 is a flowchart illustrating a method for attaching the pull-tab to a protective layer of a packaging material.

### Detailed Description

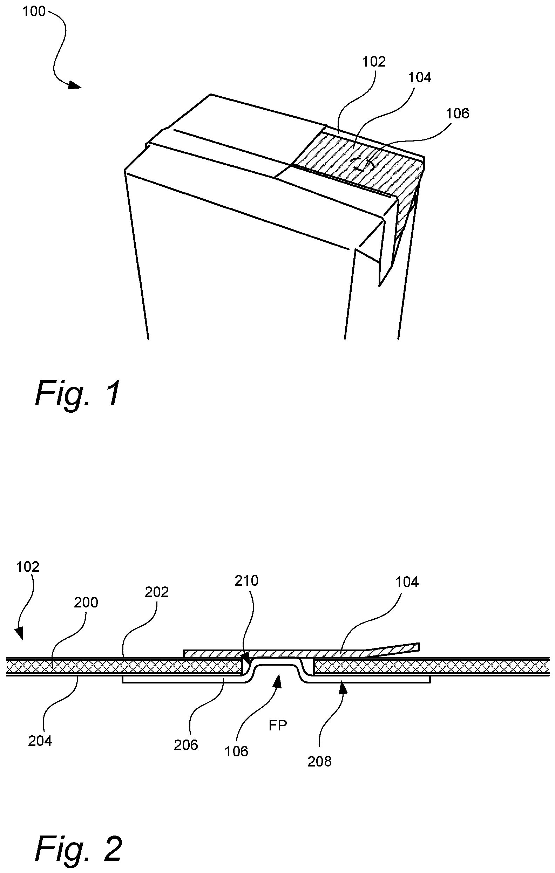

Fig. 1 generally illustrates an upper part of a package 100. The package 100 may be made of a packaging material 102 comprising a cellulose-based layer for providing robustness, an outside protection layer for protecting the cellulose-based layer from a surrounding environment, and an inside protection layer for hindering direct contact between a food product FP held inside the package and the cellulose-based layer. A pull-tab 104 covering a hole 106 in the packaging material 102 can be provided such that a consumer can gain access to the food product FP by pulling off the pull-tab 104. The concept of pull-tab opening devices is well-known and the example illustrated in fig. 1 is only one example out of several available alternatives.

Fig. 2 illustrates a cross-sectional view of the packaging material 102 and the pull-tab 104. As illustrated in fig. 2 and as described above, the packaging material 102 can comprise the cellulose-based layer 200, e.g. a carton layer, the outside protection layer 202 and the inside protection layer 204, which both may be polymer layers. In the example illustrated in fig. 2, a protective layer 206 in the form of a strip is attached to the inside protection layer 204 and positioned such that the hole 106 is covered. An inner surface 208 of the protective layer 208 can be arranged to face the food product FP and an outer surface 210 may be attached to the inside protection layer 204 and, at the hole 106, attached to the pull-tab 104. By having the protective layer 206 arranged in this way, the food product FP is hindered from coming in contact with the cellulose-based layer 206. Further, when pulling off the pull-tab, the protective layer 206 is torn apart such that access to the food product 106 via the hole 106 is provided.

In case the protective layer 206 is made of a polymer-based material having a high ultimate tensile strength and only a small portion of the pull-tab 104 is attached to the protective layer 206, there is a risk that the pull-tab 104 is detached from the protective layer 206 during the pull-off process instead of tearing this apart, which as an effect results in that there is no access provided to the food product FP. To reduce this risk, material properties of the protective layer 206 can be chosen such that this can be readily torn apart as an effect of the removal of the pull-tab 104. In addition, during application of the pull-tab 104 it can also be provided for that there is a substantial attachment surface, e.g. at least 50%, between the pull-tab 104 and the protective layer 206 at the hole 106. One way to achieve this is by having a protrusion provided on an anvil of a pull-tab applicator such that this protrusion can provide for that the protective layer 206 is put in contact with the pull-tab 104. However, having a protrusion on the anvil comes with the disadvantage that the hole 104 of the packaging material 102 has to be aligned with the protrusion of the anvil. Since precise alignment often comes with an effect on speed, a diameter of the protrusion is often substantially smaller than a diameter of the hole 106, or alternately the protrusion is provided with a slope to compensate for possible misalignment. Thus, the existing approach of using a protrusion-equipped anvil comes with a cost on speed and also a misalignment risk.

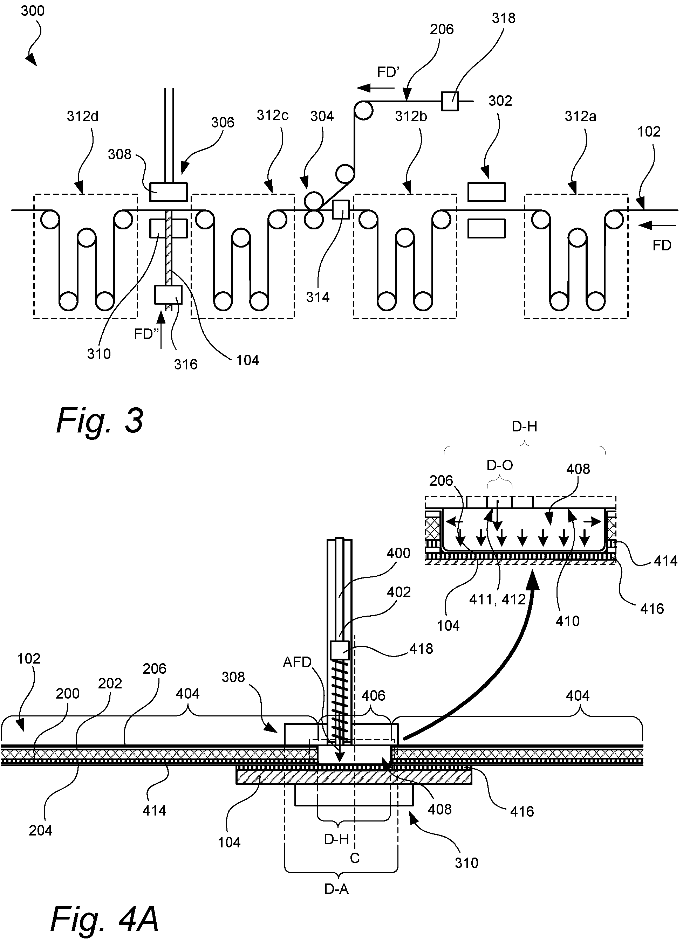

Fig. 3 generally illustrates a pull-tab applicator 300 using an air flow for providing for that the protective layer 206 is attached to the pull-tab 104 such that the risk of having the protective layer 206 detached from the pull-tab 104 during pull-off can be reduced. In addition, by using the air flow, it can be provided a more well-defined edge of the hole 106 after the protective layer 206 is torn apart and removed together with the pull-tab 104. Using the air flow namely provides for that the protective layer 206 is pushed towards the pull-tab 104 such that an abutment area between the protective layer 206 and the pull-tab 104 may be 90% or more of a hole area.

The pull-tab applicator 300 can be arranged to receive the packaging material 102, in the example illustrated as a web of packaging material. The packaging material 102 can be fed in a feeding direction FD to a hole punch station 302. In this station, the hole 106 can be punched in the packaging material 102. The hole punch station 302 may be arranged to provide one hole at a time or several holes at a time.

In case the protective layer 206 constitutes a strip, the strip may be attached to the packaging material 102 in a strip application station 304. The strip may in such case be fed in a strip feeding direction FD'. By having the strip applied, the hole 106 punched out in the hole punch station 302 can be covered by the strip, thereby avoiding contact between the food product FP and the cellulose-based layer of the packaging material once the package is filled and formed.

Downstream the strip application station 304, a pull-tab engagement station 306 can be provided. The pull-tab engagement station 306 can comprise a pull-tab engagement unit 310, such as a heat generating device, e.g. an inductor, and an anvil 308. In the pull-tab engagement station 306, sometimes referred to as a pull-tab sealing station, the pull-tab 104 is attached to the packaging material 102 and, at the hole 106, to the protective layer 206.

In the hole punch station 302 and in the pull-tab engagement station 306, the packaging material 102 may be subject to indexed movements, that is, the packaging material 102 may stand still for a moment and thereafter be moved, and so forth. To provide such indexed movements and/or to compensate for speed variations, a web buffer arrangement 312a-d may be used.

As illustrated, the packaging material 102 may be fed by a packaging material feeding unit 314, e.g. a feed roller. Even though only one such unit is illustrated, multiple feeding units may also be used. Further, the packaging material feeding unit 314 may also form part of the web buffer arrangement 312a-d.

A pull-tab feeding unit 316 may be used for feeding the pull-tab 104. As illustrated, the pull-tab 104 may be fed in a feeding direction FD" perpendicular to the feeding direction FD of the packaging material 102.

In case the protective layer 206 is the strip as illustrated in fig. 3, a strip feeding unit 318 may be used for feeding the protective layer 206.

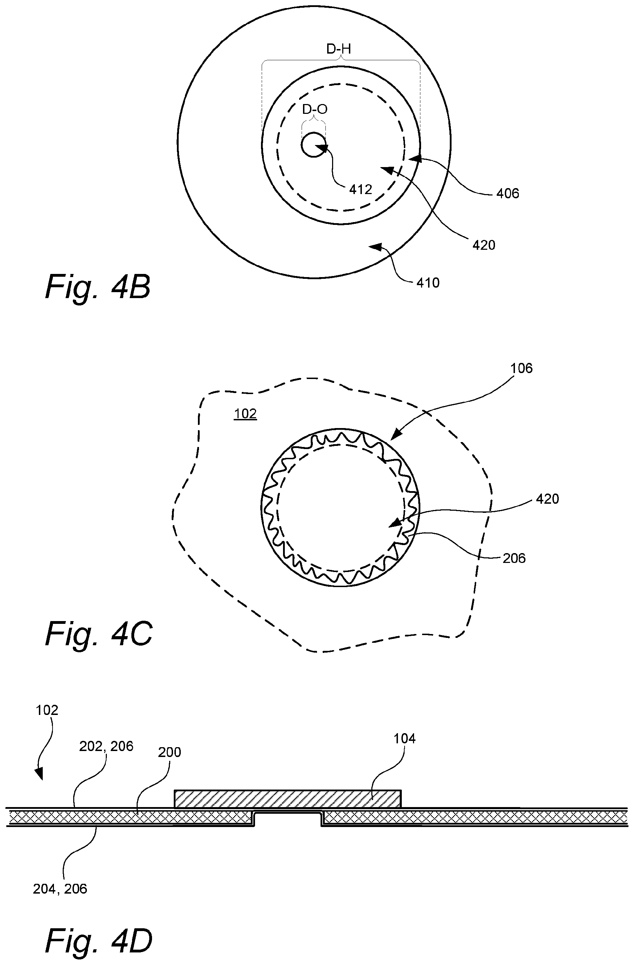

Unlike the prior art solutions, the anvil 308 can be provided with an air channel 400 as illustrated in fig. 4A, which is a cross-sectional view of the anvil 308, the packaging material 102 and the pull-tab engagement unit 310. By having an air flow 402 provided in an air flow direction AFD, the protective layer 206 can be pushed towards the pull-tab 104 such that a secure attachment between the two can be provided. As an effect of this secure attachment, during pull-off of the pull-tab 104, the risk of having the protective layer 206 detached from the pull-tab 104 can be reduced. Further, by having a large part of the protective layer 206 provided at the hole 106 attached to the pull-tab 104, e.g. 90% or more, a more well-defined edge of the hole 106 after the pull-tab 104 is removed can be provided. By reducing an area next to the edge of the hole 106, in which there is no attachment between the protective layer 206 and the pull-tab 104, it is possible to reduce any impact caused by the ultimate tensile strength of the protective layer 206. Put differently, by allowing less room for the protective layer 206 to be stretched, the pull-off process of the pull-tab 104, including a sub-process of tearing the protective layer 206, can be facilitated. In addition, by having less part of the protective layer 206 in the hole 106 attached to the pull-tab 104, the edge of the hole, once the pull-tab 104 is removed, can be more well-defined, that is, less residues of the protective layer 206 remains.

As illustrated, the packaging material 102 can be divided into non-hole areas 404 and a hole area 406. Between the anvil 308 and the protective layer 206, a cavity 408 can be formed. This cavity 408 is expanded as an effect of the air flow 402 provided via the air channel 400.

A positive effect of using the air channel 400 instead of the protrusion, as described above, is that the risk of misalignment between the anvil 308 and the pull-tab engagement unit 310 can be reduced. As long as the air channel 400 is being provided with access to the cavity 408, the protective layer 206 can be pushed towards the pull-tab 104 such that secure attachment between the two can be provided. To provide such flexibility, the anvil 308 can be provided with a flat surface area 410. An outlet 411 of the air channel 400 may have an outlet area 412 of 1-10 mm², and the hole 106 may have an area of 20-150 mm².

The attachment of the pull-tab 104 to the protective layer 206 can be made in various ways. As an example, the pull-tab engagement unit 310 may be an inductor arranged to induce eddy currents in an electrically conductive layer 414 of the packaging material 102 as well as in an electrically conductive layer 416 of the pull-tab 104. As an effect of the eddy currents, heat is generated. The heat in turn provides for that one or several polymer-based layers partly melt such that the pull-tab 104 and the protective layer 206 can be attached.

To avoid having the air channel 400 constantly opened, a spring-loaded valve 418 can be provided. By having this spring-loaded valve 418, the air channel 400 can be opened when the anvil 308 is pushed towards the pull-tab engagement unit 310.

Fig. 4B illustrates the hole 106 having the hole area 406 and the anvil 308 having the flat surface area 410 seen from above. As illustrated, by having the outlet area 412 of the outlet 411 of the anvil 308 misaligned with respect to the hole area 406, the cavity 408 formed between the protective layer 206 and the anvil 308 can still be reached and by having the air flow 402 provided, the protective layer 206 be pushed towards the pull-tab 104. As illustrated, a diameter D-O of the outlet 411 can be smaller than a diameter D-H of the hole 106. By way of example, the diameter D-O of the outlet 411 may be 25% of the diameter D-H of the hole 106 or less.

Due to a difference in height between the hole area 406 and the non-hole areas 404, an abutment area 420 between the pull-tab 104 and the outer side 210 of the protective layer 206 is often smaller than the hole area 406. However, by using the air flow 400, the abutment area 420 can be increased such that 90% or more of the hole area 406 is covered by the abutment area 420 (illustrated by dashed lines).

Fig. 4C illustrates the hole 106 and part of the packaging material 102 close to the hole after the pull-tab 104 has been removed. As illustrated, by having the abutment area 420 covering a large part of the hole area 406, the impact of residues from the protective layer 206 can be reduced. As an effect, a more well defined edge of hole 106 can be provided, which provides for that pouring of the food product FP can be facilitated, that is, less risk of spillage.

As illustrated in fig. 3, the protective layer 206 may be the strip applied to the packaging material 102 after the hole 106 is punched. However, as an alternative, the hole 106 may be punched before the outside protection layer 202 and the inside protection layer 204 are provided onto the packaging material 102. This concept is sometimes referred to as pre-laminated holes PLH. If the hole 106 constitutes a pre-laminated hole, as illustrated in fig. 4C, the outside protection layer 202 and the inside protection layer 204 may in combination function as the protective layer 206. The air flow 400 can push the inside protection layer 204 and indirectly the outside protection layer 202 towards the pull-tab 104 such that the outside protection layer 202 and optionally also the inside protection layer 204 are attached to the pull-tab 104.

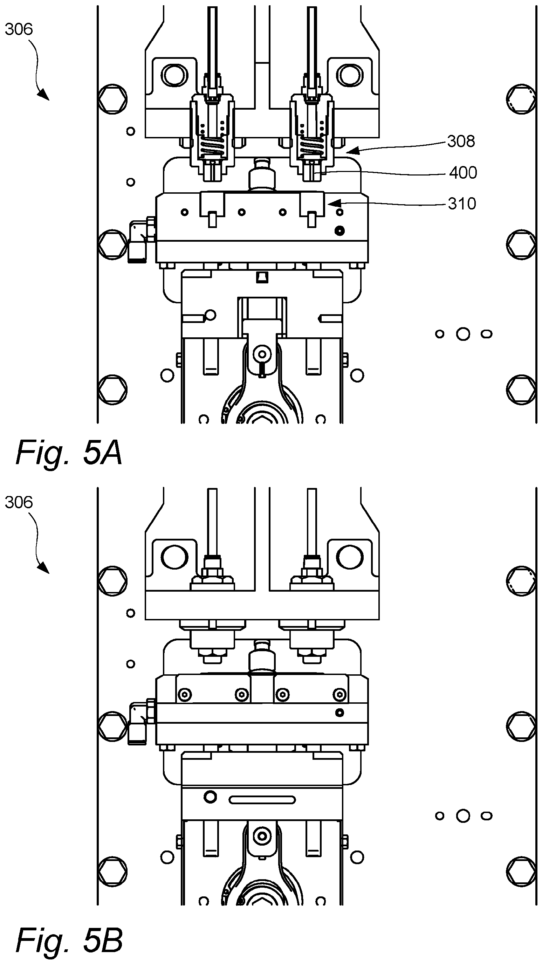

Fig. 5A illustrates by way of example the pull-tab sealing station 306 in a cross-sectional front view. In this particular example, the anvil 308 is placed above the pull-tab engagement unit 310, in this example an inductor. The air channel 400 is provided in the anvil 308 such that the protective layer 206 can be pushed towards the pull-tab 104 during the sealing operation.

Fig. 5B illustrates the same example as illustrated in fig. 5A, but in a front view instead of the cross-sectional view.

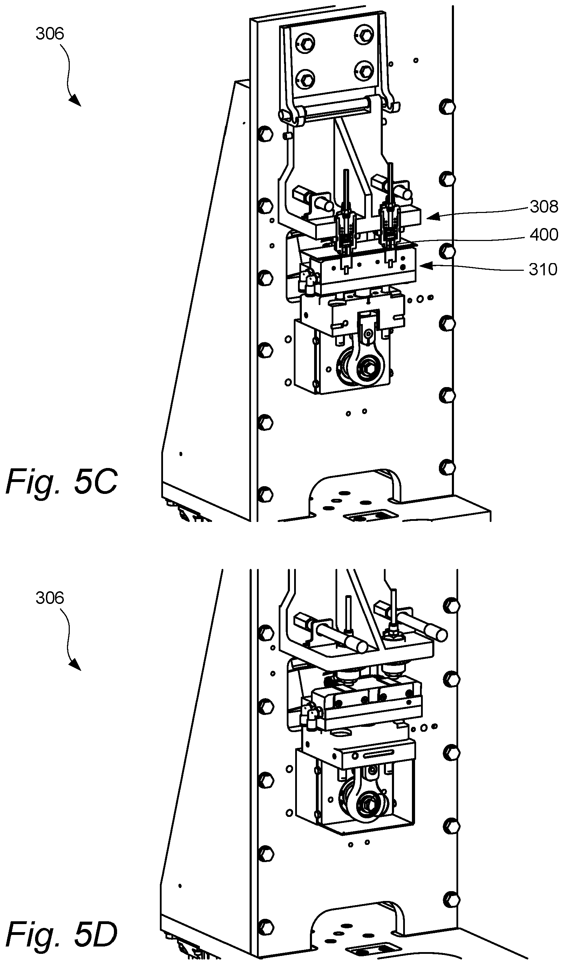

Fig. 5C illustrates the same example as illustrated in fig. 5A and 5B, but in a perspective view instead of the front view. Similar to fig. 5A, a cross-sectional view of the anvil 308 and the pull-tab engagement unit 310 is provided.

Fig. 5D illustrates the same example as illustrated in fig. 5A, 5B and 5C in the perspective view as fig. 5C. However, unlike fig. 5C, no cross-sectional view of the anvil 308 and the pull-tab engagement unit 310 is provided.

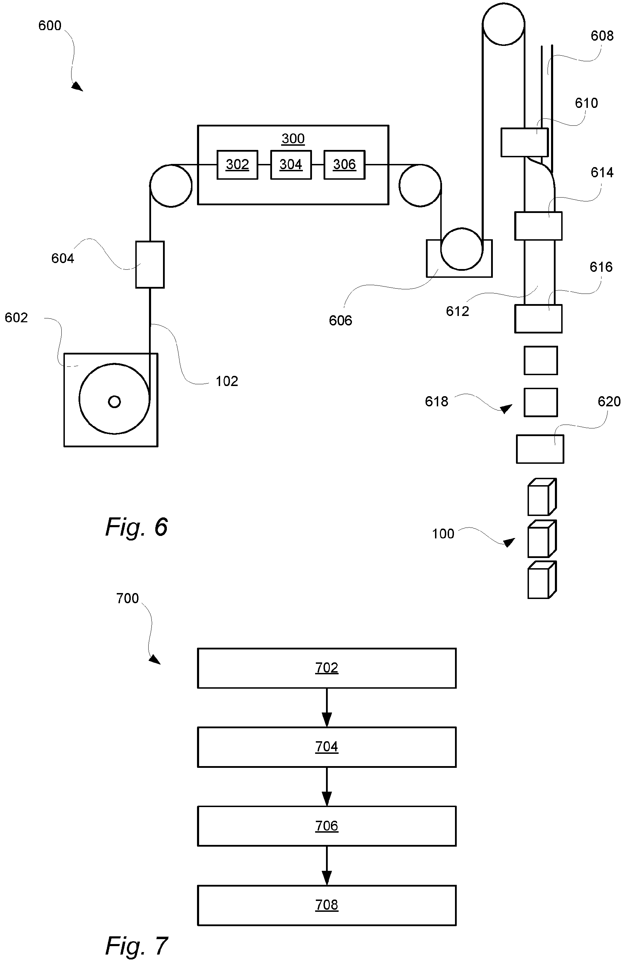

Fig. 6 generally illustrates a packaging system 600 arranged to transform the packaging material 102 into the packages 100 by way of example. The packaging material 102 may be provided to the packaging system 100 in the form of the web of packaging material rolled up on a reel. This reel may be received by a reel receiver 602. To avoid that the packaging system 600 has to be stopped when the reel is replaced, an automatic splicing unit ASU 604 may be provided. The ASU 604 is configured to splice an end of one web with a beginning of a new web such that continuous operation can be achieved. A sterilization station 606, such as a hydrogen peroxide bath or a low-voltage electron beam LVEB station, can be provided for that microorganisms on the packaging material are killed off. Downstream the sterilization station 606, a longitudinal sealing LS station 610 can be provided such that the web is formed into a tube 612. In connection with that the tube 612 is formed, a product filling pipe 608 can provide for that the food product FP is filled into the tube 612 from above. A tube guiding station 614 can be provided for guiding the tube 612 into a transversal sealing TS station 616 in which transversal sealings are provided at the same time as the tube 612 is cut into unfolded packages 618. The unfolded packages 618 may be fed into a packaging forming station 620 in which these unfolded packages 618 are folded into the packages 100. For instance, in this packaging forming station 620, top flaps may be formed and attached to side panels and bottom flaps may be formed and attached to bottoms of the packages 100.

The pull-tab applicator 300, illustrated in fig. 3, may be provided downstream the automatic splicing unit ASU 604 and upstream the sterilization station 606. As illustrated, the pull-tab applicator 300 may comprise the hole punch station 302, the strip application station 304 and the pull-tab engagement station 306.

Fig. 7 is a flowchart illustrating a method 700 for attaching the pull-tab 104 to the protective layer 206. The method 700 can comprise positioning 702, by using the packaging material feeding unit 314, the packaging material 102 with the hole 106 between the pull-tab engagement unit 310 and the anvil 308, with the outer side 210 of the protective layer 206 facing the pull-tab engagement unit 310 and the inner side 208 of the protective layer 206 facing the anvil 308; positioning 704, by using the pull-tab feeding unit 316, the pull-tab 104 over the hole 106 in the packaging material 102, at the outer side 210 of the protective layer 206; pushing 706, in the pull-tab engagement unit 310, the protective layer 206 at the location of the hole 106 towards the pull-tab 104 by providing the air flow 402 via the air channel 400 in the anvil 308; and attaching 708, by the pull-tab engagement unit 310, the pull-tab 104 to the protective layer 206.

From the description above follows that, although various embodiments of the invention have been described and shown, the invention is not restricted thereto, but may also be embodied in other ways within the scope of the subject-matter defined in the following claims.

## Claims

1. A pull-tab applicator (300) for attaching a pull-tab (104) to a protective layer (206) that covers a hole (106) in a packaging material (102), the protective layer (206) having an outer side (210) configured to face the pull-tab (104) and an inner side (208) configured to face a food product (FP), said pull-tab applicator (300) comprising
a pull-tab engagement unit (310),
an anvil (308) arranged opposite the pull-tab engagement unit (310),
a packaging material feeding unit (314) arranged to position the packaging material (102) with the hole (106) between the pull-tab engagement unit (310) and the anvil (308), with the outer side (210) of the protective layer (206) facing the pull-tab engagement unit (310) and the inner side (208) of the protective layer (206) facing the anvil (308), and
a pull-tab feeding unit (316) arranged to position the pull-tab (104) over the hole (106) in the packaging material (102), at the outer side (210) of the protective layer (206),
the pull-tab engagement unit (310) being operable to attach the pull-tab (104) to the protective layer (206), **wherein**
the anvil (308) comprises an air channel (400) arranged to provide an air flow (402) on the inner surface (208) of the protective layer (206) at the location of the hole (106), such that the protective layer (206) is pushed towards the pull-tab (104) when the pull-tab engagement unit (310) is operated to attach the pull-tab to the protective layer (206).

2. The pull-tab applicator (300) according to claim 1, wherein the air flow (402) give rise to a pressure of at least 1.5 bar inside a cavity (408) formed by the anvil (308) and the protective layer (206) in a hole area (406).

3. The pull-tab applicator (300) according to any one of the preceding claims, wherein the anvil (308) is provided with a flat surface area (410) surrounding an outlet (411) of the air channel (400) when the pull-tab engagement unit (310) is operated to attach the pull-tab to the protective layer (206).

4. The pull-tab applicator (300) according to claim 3, wherein the flat surface area (410) is at least two times greater than an outlet area (412), thereby providing for that the pull-tab applicator (300) is less sensitive to an offset of the anvil (308) with respect to the pull-tab engagement unit (310).

5. The pull-tab application arrangement (300) according to any one of the preceding claims, wherein a diameter (D-O) of the outlet (411) of the air channel (400) is less than 25% of a diameter (D-H) of the hole (106).

6. The pull-tab applicator (300) according to any one of the preceding claims, wherein the anvil (308) comprises a spring-loaded valve (418) such that the air channel (400) is opened when the anvil (308) is pushed towards the pull-tab engagement unit (310).

7. A packaging system (600) comprising
a packaging material reel receiver (602) for receiving a web of packaging material (102),
the pull-tab applicator (300) according to any one of the preceding claims,
a sterilization station (606) for sterilizing the web,
a longitudinal sealing station (610) for forming the web into a tube (612),
a product filling pipe (608) for filling food product (FP) into the tube (612), and
a transversal sealing station (616) for forming packages (618, 100) from the tube (612) filled with food product (FP).

8. A method (700) for attaching a pull-tab (104) to a protective layer (206) that covers a hole (106) in a packaging material (102), the protective layer (206) having an outer side (210) configured to face the pull-tab (104) and an inner side (208) configured to face a food product (FP), said method comprising
positioning (702), by using a packaging material feeding unit (314), the packaging material (102) with the hole (106) between a pull-tab engagement unit (310) and an anvil (308), with the outer side (210) of the protective layer (206) facing the pull-tab engagement unit (310) and the inner side (208) of the protective layer (206) facing the anvil (308),
positioning (704), by using a pull-tab feeding unit (316), the pull-tab (104) over the hole (106) in the packaging material (102), at the outer side (210) of the protective layer (206),
pushing (706), in a pull-tab engagement unit (310), the protective layer (206) at the location of the hole (106) towards the pull-tab (104) by providing an air flow (402) via an air channel (400) in the anvil (308), and
attaching (708), by the pull-tab engagement unit (310), the pull-tab (104) to the protective layer (206).

9. The method (700) according to claim 8, wherein the air flow (402) give rise to a pressure of at least 1.5 bar inside a cavity (408) formed by the anvil (308) and the protective layer (206) in a hole area (406).

10. The method (700) according to claim 8 or 9, wherein the anvil (308) is provided with a flat surface (410) surrounding an outlet (411) of the air channel (400) when the pull-tab engagement unit (310) is operated to attach the pull-tab to the protective layer (206).

11. The method (700) according to claim 10, wherein the flat surface area (410) is at least two times greater than an outlet area (412), thereby providing for that the pull-tab applicator (300) is less sensitive to an offset of the anvil (308) with respect to the pull-tab engagement unit (310).

12. The method (700) according to any one of the claims 8 to 11, wherein a diameter (D-O) of the outlet (411) of the air channel (400) is less than 25% of a diameter (D-H) of the hole (106).

13. A package (618, 100) obtainable by a method according to any one of the claims 8 to 12.

14. The package (618, 100) according to claim 13, wherein the abutment area (420) between the pull-tab (104) and the outer side (210) of the protective layer (206) is at least 90% of the hole area (406).

15. The package (618, 100) according to claim 13 or 14, wherein the protective layer (206) is a polyethylene-based strip and the packaging material (102) is a cellulose-based packaging material, such as a carton-based packaging material.
